# EUROPEAN PATENT APPLICATION

(11) **EP 2 932 938 A1**
(43) Date of publication of application: **21.10.2015**
(21) Application number: 15163148.8
(22) Date of filing: 10.04.2015
(51) Int. Cl.: A61C 8/00, A61C 9/00

(54) **METHOD FOR DETECTING THE POSITION OF DENTAL IMPLANTS, DENTAL ANALOG FOR CARRYING OUT SAID METHOD AND SYSTEM FOR DETECTING THE POSITION OF DENTAL IMPLANTS COMPRISING SAID DENTAL ANALOG**

(30) Priority: 14.04.2014 IT VA20140015 U
(71) Applicant: Sodim SRL, 28015 Momo (NO) (IT)
(72) Inventor: Solara, Fulvio Mario, 28015 MOMO (NO) (IT)
(74) Representative: Robba, Pierpaolo

(57) **Abstract**

The present invention relates to a method for detecting the position of dental implants, to a dental analog (10) that can be used for carrying out the above-mentioned method, as well as to a system for detecting the position of dental implants comprising said dental analog. According to the invention respective transfer assemblies (110, 120) are applied to the dental implants in the oral cavity, the position of said transfer assemblies is reproduced in the impression material in an impression tray (300), respective dental analogs (10) are inserted into the impression material, in the impressions left by the corresponding transfer assemblies, and the arrangement of said dental analogs (10) is directly measured in said impression tray (300), through a process of "reverse engineering". The transfer assemblies (110, 120) and the dental analogs (10) used for carrying out the method according to the invention have shapes that allow to detect the dental impression with high precision, can assume a perfectly stable position in the impression tray (300) and can be inserted into said impression tray (300) and removed therefrom without the risk of deformations.

## Description

### Technical field

The present invention relates to a method for detecting the position of dental implants. The method according to the invention finds application in the field of dentistry and dental technology for detecting the position of dental implants and reproducing such position for manufacturing dental prostheses and similar products.

The present invention also relates to a dental analog that can be used for carrying out the above-mentioned method, as well as to a system for detecting the position of dental implants comprising said dental analog.

### Prior art

Dental practices and dental laboratories have long made use of CAD - CAM technology for manufacturing dental prostheses and similar products, which technology consists in the joint and integrated use of software systems for Computer-Aided Design (CAD) and Computer Aided Manufacturing (CAM).

Thanks to the use of this technology it is aimed to improve the quality of execution and life of dental prostheses.

However, techniques for optical and non-invasive detection of the dental impression directly in the oral cavity are still being studied and they have not yet provided reliable results.

Moreover, currently available devices are very expensive and require an extremely long time for an accurate optical scanning of the oral cavity.

The use of such techniques currently seems to be premature.

As a result, at present there are no methods and/or systems enabling the detection of the dental impression directly in the oral cavity without the need for invasive systems.

More particularly, especially the traditional systems for impression of dental implants are very invasive. In order to detect the impression of dental implants, prior art systems use very long transfers, which frequently come to interfere with the opposing dental arch so that they do not allow to acquire data concerning the position of the dental implants and data concerning the dental occlusion in a single session, which implies for the patient the need for a further examination.

These transfers are bound together with wires and stabilized to the impression tray by means of resins, the preparation of which is usually carried out manually, in a different way each time. The position of the transfers is controlled by the dental technician, who frequently has to intervene to make corrections.

The final result is therefore highly dependent on the knowledge and experience of the dental technician and it is subject to inaccuracies due to human error.

In the event of inaccuracies, the work has to be made again, with a consequent loss of time and money. Furthermore, repeated interventions of applying and removing the devices in the oral cavity of the patient can be disadvantageous.

It is evident that as the number of the steps necessary for detecting the dental impression increases, the likelihood of errors also drastically increases.

Moreover, the use of materials that are easily subject to inherent structural modifications, such as resins, waxes, plasters, and the like, also increases the likelihood of errors and inaccuracies.

The main object of the invention is to provide a method for detecting the position of dental implants which allows to overcome the problems and risks of errors related to the use of the above-mentioned methods.

Another object of the present invention is to provide a method for detecting the position of dental implants in which the obtained result is independent from the knowledge, skills and experience of the dentist or dental technician.

A further object of the present invention is to provide a method for detecting the position of dental implants which is not invasive.

These and other objects are achieved by the invention as claimed in the appended claims.

### Summary of the invention

The method for detecting the position of dental implants according to the invention essentially provides the steps of:
- applying respective transfer assemblies to implants in the oral cavity;
- reproducing the position of said transfer assemblies in an impression tray containing an impression material;
- applying corresponding dental analogs to said impression tray, one dental analog in the impression left by each respective transfer assembly;
- directly measuring the position of said dental analogs in the impression tray.

The measurements thus obtained can be directly used as an input for mathematical algorithms and/or softwares that allow - in a per se known manner - to obtain a dental prosthesis, a working model or the like.

Thanks to the method according to the invention, it is possible to avoid the use of invasive systems for detecting the dental impression directly in the oral cavity.

On the other hand, still thanks to the method according to the invention, it is possible to avoid the use of models made of plaster, wax or other materials subject to deformation and structural changes, since the detection of the position of the dental analogs is directly performed in the impression tray.

For this purpose, the method according to the invention provides the use of dental analogs that comprise a first portion adapted to penetrate with precision and without causing errors or deformations into the impression left by the respective transfer assemblies in the impression material contained in the impression tray and a second portion protruding from the impression material and subject to measurement.

In order to make the dental analog penetrate into the impression material in a precise manner and without causing deformations, it will be necessary that said first portion of said analog has a shape corresponding to the shape of the portion of the transfer assembly that penetrates into the impression material.

Advantageously, both the employed transfer assembly and dental analog will have a shape that enables the detection of the impression with great precision and that can assume a perfectly stable position in the impression tray.

More particularly, said transfer assembly and said dental analog have a shape that prevents any undesired rotation, so that the correct angular position of the dental implant is exactly reproduced with high precision by the dental analog in the impression tray.

Furthermore, said transfer assembly and said dental analog have a shape that allows to remove the transfer assembly (or part of it) from the impression material and to insert the dental analog into said impression material with precision and without the risk of deformation.

Advantageously, therefore, the mating of the transfer assembly and of the dental analog with the impression material does not imply tensile, torsional, compressive or distortive maneuvers.

The second portion of the dental analog is shaped so as to replicate or represent the shape of a dental implant analog, possibly with a length variable according to the needs, and comprises an end portion having a shape suitable to be detected by known and commonly used measurement systems (contour followers, scanners, and so on).

As mentioned above, the method according to the invention provides for the determination of the position of dental implants by means of detecting the position of the dental analogs - namely of the portion of said analogs that protrudes from the impression material - directly in the impression tray, by means of a process of "reverse engineering".

### Brief description of the drawings

The invention will be better understood from the following description of a preferred embodiment, given by way of non-limiting example with reference to the accompanying drawings in which:
Figure 1a is a perspective view of a transfer that can be used in a system suitable for carrying out the method according to the invention;
Figure 1b is a cross-sectional view of the transfer of Figure 1a, shown provided with a cap;
Figure 2a is a perspective view of a dental analog that can be used in a system suitable for carrying out the method according to the invention, in combination with the transfer of Figures 1a - 1b;
Figure 2b is a perspective view from a different point of view of the dental analog of
Figure 2a;

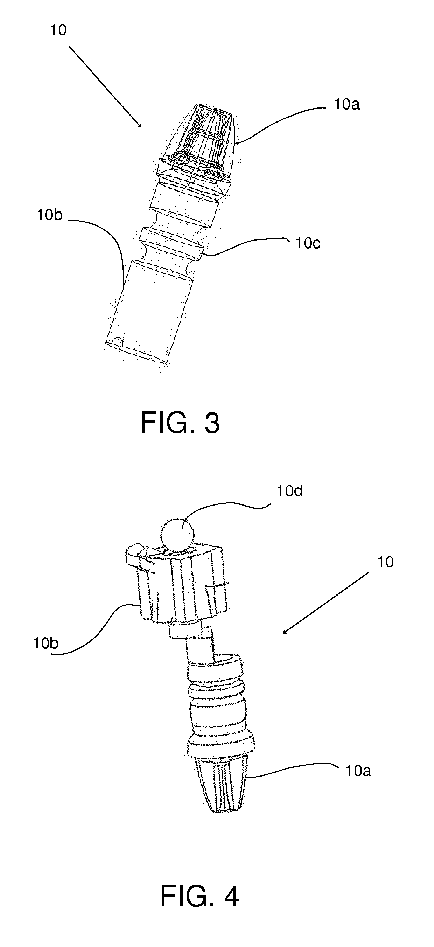

Figure 3 is a perspective view of a dental analog that can be used in a system suitable for carrying out the method according to the invention, according to an embodiment variant;
Figure 4 is a perspective view of a dental analog that can be used in a system suitable for carrying out the method according to the invention, according to a further embodiment variant;

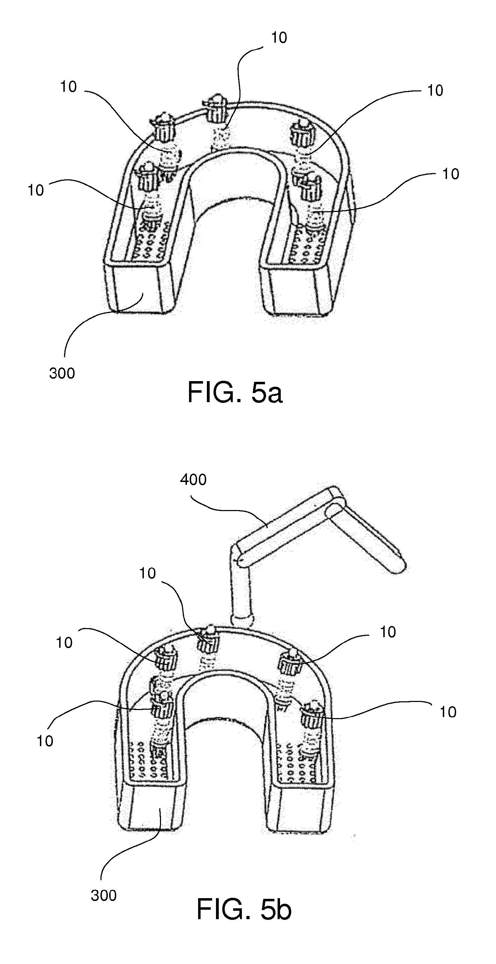

Figure 5a schematically illustrates the step of inserting dental analogs of the type of

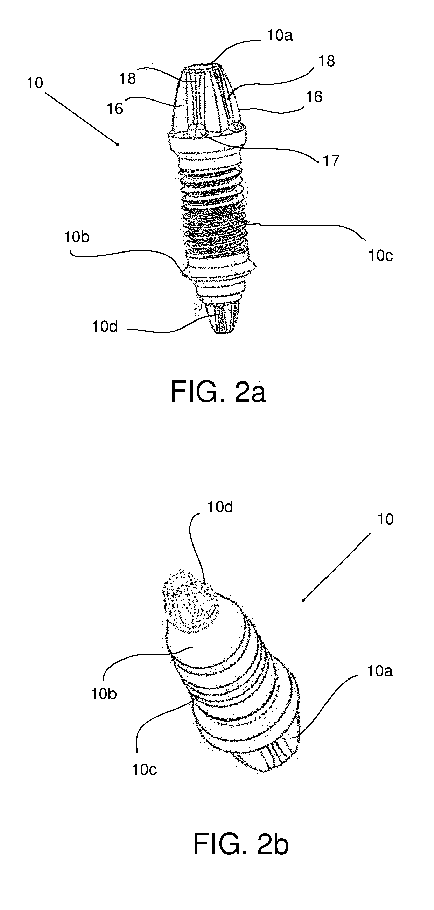

Figures 2a - 2b into an impression tray according to the method of the invention;
Figure 5b schematically illustrates the step of detecting the position of dental analogs of the type of Figures 2a - 2b in an impression tray according to the method of the invention.

### Detailed description of a preferred embodiment of the invention

As mentioned above, the method for detecting the position of dental implants according to the invention essentially provides the steps of:
- applying respective transfer assemblies to dental implants in the oral cavity;
- reproducing the position of said transfer assemblies in an impression tray containing impression material, thereby obtaining a dental impression;
- applying corresponding dental analogs to said impression tray by inserting said dental analogs in the impression material, one in the impression left by each respective transfer assembly;
- directly measuring the position of said dental analogs in the impression tray.

According to the preferred embodiment described herein, this method is carried out by using, for each dental implant, a transfer assembly made according to the teachings of Italian patent IT 1,410,054.

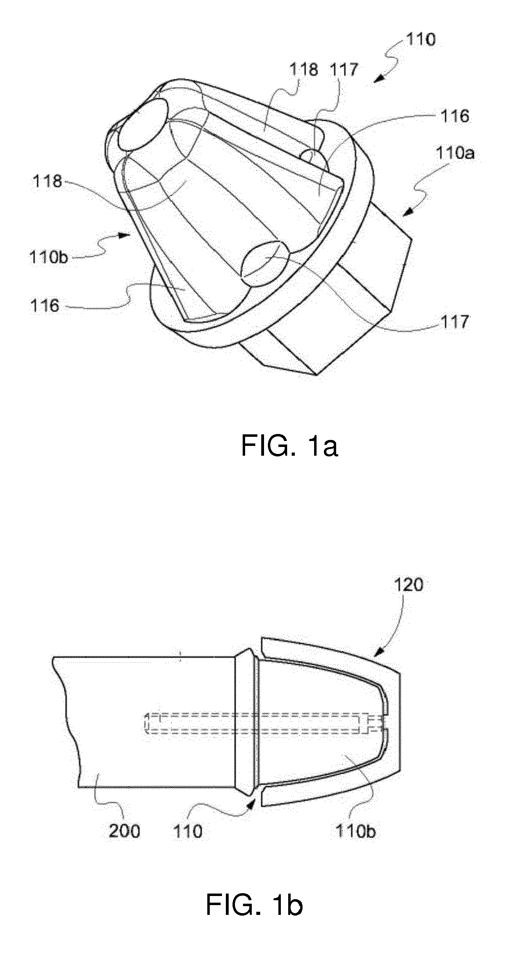

With reference to Figures 1a and 1b, the transfer assembly comprises at least one transfer 110 comprising a first portion 110a intended to be coupled with a dental implant 200 and a second portion 110b designed to protrude from said dental implant and to penetrate into the impression material in an impression tray of a system for dental impressions; said second portion has a substantially frusto-conical shape and is provided on its outer surface with a plurality of longitudinal projections 116 and a plurality of longitudinal recesses 118, arranged alternately to each other and mutually connected by rounded connecting surfaces, which gives said surface a sinuous profile. This sinuous profile on the one hand facilitates the insertion into the impression tray, and on the other hand eliminates the risk of deformations of the impression material when being removed from the impression tray. In order to further increase the above advantages, rounded bulges 117 are preferably provided close to the base of said longitudinal recesses 118.

Preferably, the transfer assembly further comprises a removable hollow cap 120, the inner surface of which is complementary to the outer surface of the second portion 110b of the transfer 110: said cap 120 can be fitted on said second portion of said transfer and can remain in the impression tray after removal thereof from the oral cavity.

The transfer assembly thus realized guarantees precision in the taking of the impression and, at the same time, allows to dramatically reduce the discomfort experienced by the patient with the systems of the prior art during removal of the impression tray on the dental implants.

Moreover, thanks to the protrusions and recesses formed on the outer surface 110 of the transfer - and correspondingly formed on the inner surface of the cap 120 - any rotation between said transfer and said cap is prevented, so that the correct angular position of the dental implant is exactly reproduced in the impression material.

Furthermore, thanks to the sinuous shape of the outer surface of the transfer and, correspondingly, of the inner surface of the cap, it is possible to remove said cap 120 from said transfer 110 without the risk of deformations.

Turning now to Figures 2a and 2b, in order to carry out the method according to the invention, a corresponding dental analog 10 is provided for each transfer assembly, which dental analog comprises a first portion 10a and a second portion 10b, said first portion 10a being intended to penetrate into the impression material contained in the impression tray, into the impression left by the transfer 110 of the respective transfer assembly.

The first portion 10a of the dental analog 10 has a shape and size corresponding to those of the second portion 110b of the corresponding transfer 110, in order to be inserted into the impression left by said second portion 110b of said transfer 110 without the risk of deformations.

It is evident that, if the transfer assembly also includes a cap 120, the shape of the first portion 10a of the dental analog 10 will be complementary to the shape of the inner surface of the cap 120, so as to be inserted into said cap 120 and engage it without the risk of deformations.

In the illustrated embodiment, the first portion 10a therefore has a substantially frusto-conical shape and is provided on its outer surface with a plurality of longitudinal projections 16 and a plurality of longitudinal recesses 18, arranged alternately to each other and mutually connected by rounded connecting surfaces.

Similarly to what is provided in the transfer 110, rounded bulges 17 are provided close to the base of said longitudinal recesses 18.

The so shaped first portion 10a of the dental analog 10 can be accurately inserted into the cap 120 of the transfer assembly in the impression tray, thus ensuring accuracy in positioning - including angular positioning - and avoiding the risk of deformations.

The second portion 10b of the dental analog 10 has a shape adapted to replicate or represent the shape and arrangement of the corresponding dental implant and ends with an end portion 10d shaped so as to be easily detected through measurement systems commonly used in the field (contour followers, scanners or other optical detecting devices, and so on).

As can be seen in Figures 2a and 2b, the dental analog may further comprise an intermediate portion 10c whose outer surface comprises retention means, so that it can be used for the development of traditional casts by pouring of suitable material, such as plaster.

Figure 3 shows an alternative embodiment variant of the dental analog 10 comprising a second portion 10b which advantageously has a particularly simple structure - realized in the form of a solid of revolution - which, therefore, is particularly easy to be detected.

In the examples illustrated in Figures 2a - 2b and 3, the first portion 10a and the second portion 10b of the dental analog 10 are coaxially arranged. However, this provision shall not be construed as limiting.

In a further alternative embodiment variant - shown in Figure 4 - the first portion 10a and the second portion 10b of the dental analog 10 are offset relative to each other. Similarly, they could be inclined relative to each other, for example by an angle between 0° and 60°. It is sufficient that they are connected in such a way that a calculation is sufficient for exactly determining the position of the first portion 10a by measuring the second portion 10b (and/or vice versa).

Furthermore, although in the illustrated embodiment the portions 10a, 10b of the dental analog 10 are represented as being formed in one piece, it is also possible to provide that the portions 10a, 10b of the dental analog 10 are made as two separate components which are removably coupled to each other.

In general, the method according to the invention is carried out as follows:
- in a first step, a transfer assembly comprising a transfer 110 and, possibly, a corresponding cap 120 are applied to each dental implant in the oral cavity, respectively;
- in a second step, an impression tray containing impression material is inserted into the oral cavity for taking an impression of said oral cavity and, specifically of the arrangement of the dental implants, by making said transfer assemblies penetrate into said impression material;
- in a third step, the impression tray is removed from the oral cavity and the transfers 110 of the respective transfer assemblies come out from the impression material, while the caps 120 (if provided) remain inside it;
- in a fourth step, corresponding dental analogs 10 are inserted into the impression tray 300, and specifically the first portion 10a of each dental analog 10 is inserted into the impression of the respective transfer assembly and engages the respective cap 120 (if provided); this step is shown in Figure 5a; - in a fifth step, the arrangement of said dental analogs 10, thanks to their second portion 10b protruding from the impression material, is directly detected in the impression tray 300 by using a suitable detecting device 400; this step is shown in Figure 5b.

In this last step it is possible, for example, to exploit 3D laser scanning technology, five-coordinate measuring machines (CMM) and portable CAM2 3D documentation devices for integrating the processes of 3D modeling in a single step. CAM2 measurement solutions are optimal for many applications of "reverse engineering", such as, for example, rapid prototyping and composite material surface control.

If optical detecting devices are used, it is possible to cover the surface of the second portion 10b of the dental analog 10 with a coating (spray, varnish, and so on) that facilitates the measurement of the same before proceeding to the detecting step.

It is evident from the above description that the invention achieves the objects set forth above, as it obviates the drawbacks of prior art and enables an accurate and non-invasive detection of the position of dental implants.

It is also evident that the above described embodiment is given only by way of non-limiting example and that several modifications and variations are possible without departing from the scope of the invention as defined by the appended claims.

## Claims

1. Method for detecting the position of dental implants, comprising the steps of:
- applying to each of said dental implants (200) a respective transfer assembly (110,120) comprising at least one transfer (110) that comprises a first portion (110a) intended to be coupled with said dental implant (200) and a second portion (110b) designed to protrude from said dental implant;
- reproducing the position of said transfer assemblies (110) in an impression tray (300) containing impression material by making said second portions (110b) of said transfers (110) penetrate into said impression material;
- removing said impression tray (300) from said transfers (110);
- inserting dental analogs (10), one for each of said transfer assemblies, into said impression tray, each of said dental analogs comprising a first portion (10a), which has the same shape and size as the second portion (110b) of the transfer (110) of the corresponding transfer assembly, and a second portion (10b), said first portion (10a) being made to penetrate into the impression left in the impression material by the transfer (110) of the corresponding transfer assembly;
- directly detecting the arrangement of each of said dental analogs (10) in said impression tray (300) by measuring the second portion (10b) of said dental analog.

2. Method according to claim 1, wherein each of said transfer assemblies further comprises a hollow cap (120), the inner surface of which is complementary to the outer surface of said second portion (110b) of said transfer (110), said cap (120) being fitted on said second portion of said transfer and remaining in the impression material when said impression tray is removed from said transfer.

3. Method according to claim 2, wherein said first portion (10a) of said dental analog engages said cap (120) of the respective transfer assembly when it is made to penetrate into the impression of said transfer in the impression tray (200).

4. Method according to claim 1, wherein said second portion (10b) of said dental analog comprises an end portion (10d) adapted to facilitate the measurement and wherein the arrangement of each of said dental analog (10) is detected by measuring said end portion (10d).

5. Method according to any one of the preceding claims, wherein said measurement of said second portion (10b) of said dental analog is carried out by means of contour followers.

6. Method according to any one of the preceding claims, wherein said measurement of said second portion (10b) of said dental analog is carried out by means of scanners or similar optical detecting devices.

7. Dental analog (10) for a system for detecting the position of dental implants, comprising a first portion (10a) intended to be inserted in the impression material of an impression tray and a second portion (10b), **characterized in that** said first portion (10a) has a substantially frusto-conical shape and is provided on its outer surface with a plurality of longitudinal projections (16) and a plurality of longitudinal recesses (18), arranged alternately to each other and mutually connected by rounded connecting surfaces.

8. Dental analog (10) according to claim 7, wherein rounded bulges (17) are provided close to the base of said longitudinal recesses (18).

9. Dental analog according to any of claims 6 to 8, wherein said first and said second portion (10a, 10b) of said dental analog are coaxially arranged.

10. Dental analog according to any of claims 6 to 8, wherein said first and said second portion (10a, 10b) of said dental analog are offset relative to each other.

11. Dental analog according to any of claims 6 to 8, wherein said first and said second portion (10a, 10b) of said dental analog are inclined relative to each other, by an angle preferably comprised between 0° and 60°.

12. Dental analog according to any of claims 6 to 11, wherein said first and said second portion (10a, 10b) of said dental analog are made as two separate pieces removably coupled to each other.

13. System for detecting the position of dental implants by means of the method according to any of the claims 1 to 5, comprising one or more transfer assemblies (110, 120), an impression tray (200) containing impression material, one or more dental analogs and a detecting device (300), **characterized in that** it comprises one or more dental analogs (10) according to any of the claims 6 to 12.

14. System according to claim 13, wherein each of said transfers (110) of said transfer assemblies comprises a first portion (110a) intended to be coupled with a respective dental implant and a second portion (110b) designed to protrude from said dental implant and wherein said second portion has a substantially frusto-conical shape and is provided on its outer surface with a plurality of longitudinal projections (116) and a plurality of longitudinal recesses (118), arranged alternately to each other and mutually connected by rounded connecting surfaces.

15. System according to claim 14, wherein each of said transfer assemblies comprises a hollow cap (120), the inner surface of which is complementary to the outer surface of said second portion (110b) of the respective transfer (110).
